# EUROPEAN PATENT APPLICATION

(11) **EP 4 671 024 A1**
(43) Date of publication of application: **31.12.2025**
(21) Application number: 25169928.6
(22) Date of filing: 11.04.2025
(51) Int. Cl.: B60K 11/02, B60K 11/06

(54) **UTILITY VEHICLE**

(30) Priority: 25.06.2024 JP 2024102311
(71) Applicant: Kubota Corporation, Osaka-shi, Osaka 556-8601 (JP)
(72) Inventor: NAGARA, Taiki, SAKAI-SHI, OSAKA, 5900908 (JP); UKAI, Tomoyuki, SAKAI-SHI, OSAKA, 5900908 (JP); TOMIUKA, Kota, SAKAI-SHI, OSAKA, 5900908 (JP)
(74) Representative: Cabinet Beau de Loménie

(57) **Abstract**

A utility vehicle includes a radiator (11) in a front part of the body, the radiator being connected to an engine (9) via a coolant circulation path (12). A blower (14) is disposed in a surrounding area of the engine (9) and configured to supply cooling air to the engine (9).

## Description

### Technical Field

The present invention relates to a utility vehicle.

### Background Art

A utility vehicle having an engine in a rear part of a body (vehicle body) has been known, as disclosed in Patent Literature 1.

### Citation List

### Patent literature

Patent Literature 1

Japanese Unexamined Patent Application No. 2023-100173

### Summary of Invention

### Technical Problem

The vehicle typically has a radiator in a front part of the vehicle to cool the engine through a connection between the radiator and the engine via a coolant circulation path. In the rear part of the body, the engine may not be efficiently cooled because heat radiated from the engine and auxiliaries thereof, such as exhaust muffler, is accumulated in the rear part.

The present invention provides a utility vehicle capable of cooling the engine efficiently at low cost.

### Solution to Problem

The utility vehicle of the present invention includes: a body; an engine in a rear part of the body; a radiator in a front part of the body, the radiator being connected to the engine via a coolant circulation path; and a blower disposed in a surrounding area of the engine and configured to supply cooling air to the engine.

With this configuration, the engine is cooled not only by the coolant circulating between the engine and the radiator, but also by cooling air supplied by the blower. In addition, the cooling air supplied from the blower also flows through an area surrounding the engine and prevents heat accumulation in the area surrounding the engine. As compared with a case where an auxiliary radiator is provided, with this blower, an additional coolant circulation path is unnecessary and the cost can be suppressed. As a result, the engine can be cooled efficiently and at low cost.

In the present invention, the surrounding area may be on a laterally outer side relative to the engine.

With this configuration, cooling air to be supplied to the engine by the blower can be introduced efficiently from a lateral side of the body. As a result, the engine can be efficiently cooled.

In the present invention, the blower may include a rotary fan and an electric motor for driving the rotary fan.

With this configuration, by simply supplying electric power to the electric motor, the blower can be driven at low cost. As a result, the engine can be cooled at low cost.

In the present invention, the utility vehicle may further include a battery adjacent to a lateral side of the blower.

With this configuration, the battery is in the vicinity of the blower, and an electric circuit connecting the electric motor with the battery can be simplified. As a result, the engine can be cooled at low cost.

### Brief Description of Drawings

Fig. 1 is a left side view of a utility vehicle.
Fig. 2 is a plan view showing a cooling structure of an engine.
Fig. 3 is a perspective view showing the cooling structure of the engine.

### Description of Embodiments

An embodiment of the present invention will be described below with reference to the drawings.

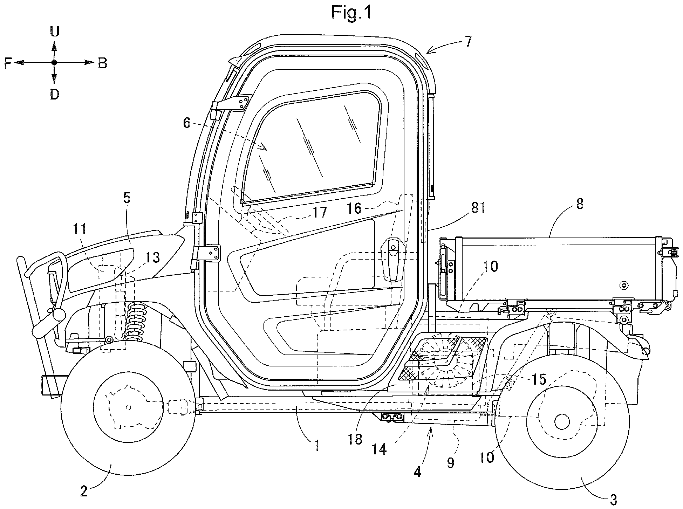

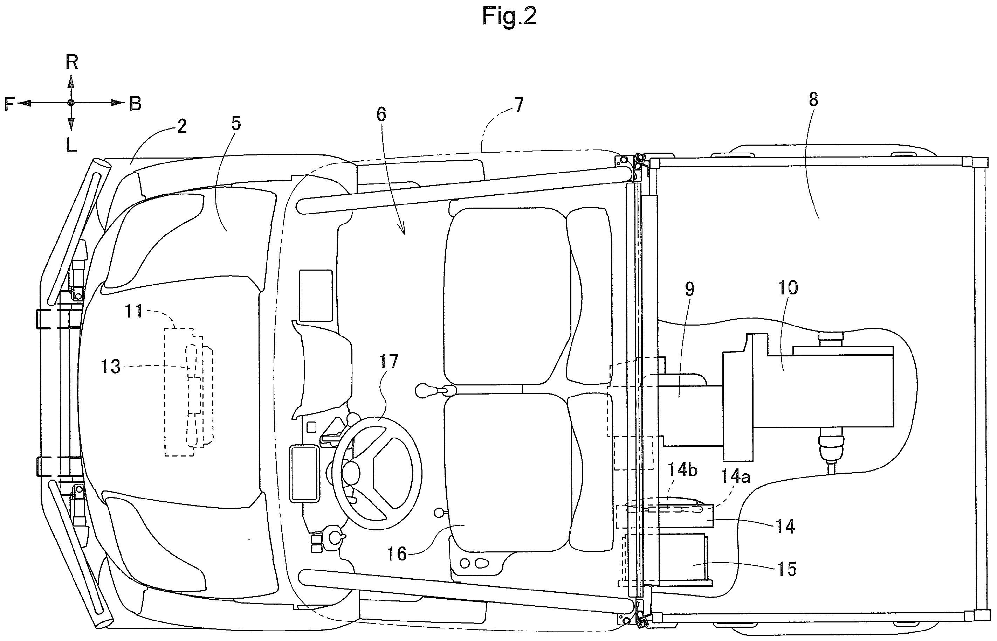

In the following description, with respect to the body of the utility vehicle, a side indicated by an arrow F in Figs. 1 and 2 is "front" side of the body, a side indicated by an arrow B in Figs. 1 and 2 is "rear" side of the body, a side indicated by an arrow U in Fig. 1 is "upper" side of the body, a side indicated by an arrow D in Fig. 1 is "lower" side of the body, a side indicated by an arrow L in Fig. 2 is "left" side of the body, and a side indicated by an arrow R in Fig. 2 is "right" side of the body. A right-left direction of the body corresponds to a transversal direction of the body, and may also be referred to as "lateral" direction of the body.

### Entire structure of utility vehicle

A utility vehicle as shown in Figs. 1 and 2 is used for various purposes, such as load carriage and recreation. The utility vehicle includes a body 4 with a body frame 1, steerable (turnable) and drivable front wheels 2 forward of the body frame 1, and a pair of drivable rear wheels 3 (one right and one left) rearward of the body frame 1. A front part of the body 4 includes a front lid 5. A drive section 6 is between the front wheels 2 and the rear wheels 3 of the body 4. The drive section 6 includes: a driver's seat 16; a steering wheel 17 for changing orientation of the front wheels 2; and a cabin 7 defining a space for a driver (and a passenger). A cargo bed 8 is in a rear part of the body 4. The rear part of the body 4 also has an engine 9, and a travel power transmission 10 for receiving a motive power from the engine 9, changing the motive power, and transmitting the changed motive power to the front wheels 2 and the rear wheels 3. The travel power transmission 10 extends rearward from a rear part of the engine 9. The engine 9 and the travel power transmission 10 are covered by the cargo bed 8 from above.

### Cooling structure of engine

As shown in Figs. 1, 2 and 3, the front part of the body 4 has a radiator 11 which is connected to the engine 9 via a coolant circulation path 12. The radiator 11 is covered by the front lid 5 from above. On a rear side of the radiator 11, there is provided a rotary fan 13 which is drivable by an electric motor (not shown). By the rotation of the rotary fan 13, cooling air is introduced to the radiator 11 from a front side of the body 4, and the introduced cooling air cools a coolant inside the radiator 11. The cooled coolant is supplied to the engine 9 through an outbound path 12a of the coolant circulation path 12, and the coolant that has cooled the engine 9 is returned to the radiator 11 through a return path 12b of the coolant circulation path 12, to thereby achieve the cooling of the engine 9.

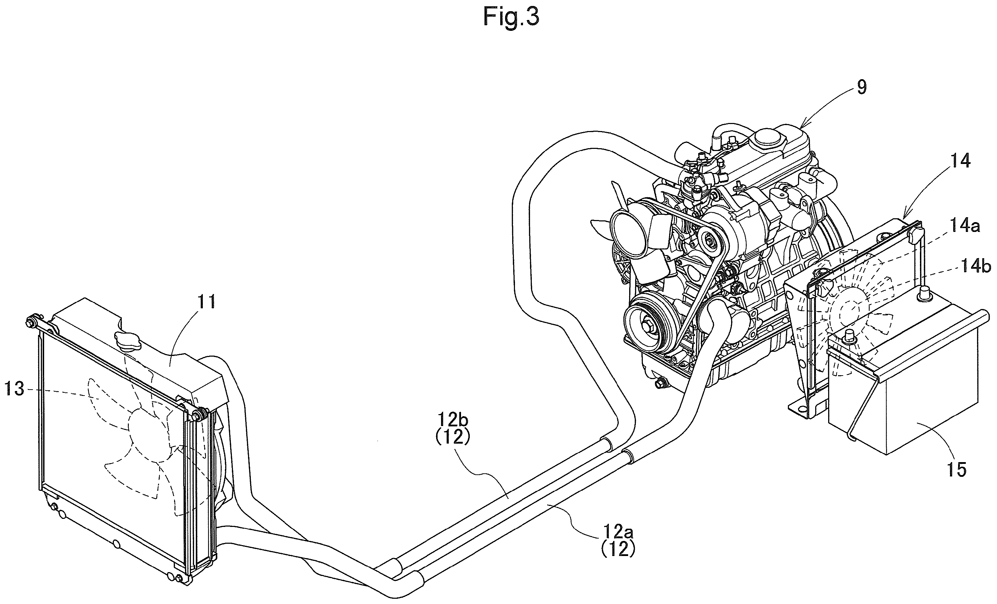

As shown in Figs. 2 and 3, a blower 14 is provided in an area surrounding the engine 9. The blower 14 is configured to supply cooling air to the engine 9 to thereby cool the engine 9. The cooling air supplied by the blower 14 also flows through the area surrounding the engine 9 and prevents heat accumulation in the area surrounding the engine 9.

As shown in Figs. 2 and 3, the area surrounding the engine 9 in which the blower 14 is disposed is adjacent to a lateral side of the engine 9. The blower 14 is configured to introduce from a lateral side of the body 4 the cooling air to be supplied to the engine 9.

As shown in Figs. 2 and 3, the blower 14 includes a rotary fan 14a, and an electric motor 14b to which the rotary fan 14a is connected. In the blower 14, the rotary fan 14a is driven by the electric motor 14b, and air is introduced from an outside of the body by the rotary fan 14a and supplied as cooling air to the engine 9.

As shown in Figs. 2 and 3, a battery 15 is adjacent to a lateral side of the blower 14. The battery 15 is connected to the electric motor 14b and supplies electric power to the electric motor 14b. As shown in Fig. 1, a side cover 18 is on the lateral side of the body 4, and the blower 14 and the battery 15 are covered from a lateral side. The side cover 18 has a suction port allowing the blower 14 to introduce cooling air. The suction port has a dust prevention member in a form of mesh.

### Other embodiments

(1) In the embodiment described above, the blower 14 is in an area on a laterally outer side relative to the engine 9. However, the blower 14 may be provided forward of the engine 9, rearward of the engine 9, or above the engine 9.
(2) In the embodiment described above, the blower 14 is driven by the electric motor 14b. However, the blower 14 may be driven by power from the engine 9.
(3) In the embodiment described above, the battery 15 is adjacent to the lateral side of the blower 14. However, the battery may be anywhere relative to the blower 14, for example, above the blower 14, frontward of the blower 14, or rearward of the blower 14.

### Industrial Applicability

The present invention is applicable to a utility vehicle having an engine in a rear part of the body.

### Reference Signs List

4 body
9 engine
11 radiator
12 coolant circulation path
14 blower
14a rotary fan
14b electric motor
15 battery

## Claims

1. A utility vehicle comprising:
a body (4);
an engine (9) in a rear part of the body (4);
a radiator (11) in a front part of the body (4), the radiator (11) being connected to the engine (9) via a coolant circulation path (12); and
a blower (14) disposed in a surrounding area of the engine (9) and configured to supply cooling air to the engine (9).

2. The utility vehicle according to claim 1, wherein the surrounding area is on a laterally outer side relative to the engine (9).

3. The utility vehicle according to claim 1 or 2, wherein the blower (14) includes a rotary fan (14a) and an electric motor (14b) for driving the rotary fan (14a).

4. The utility vehicle according to any one of claims 1 to 3, further comprising a battery (15) adjacent to a lateral side of the blower (14).
